# EUROPÄISCHE PATENTSCHRIFT

(11) **EP 1 300 453 B1**
(45) Veröffentlichungstag und Bekanntmachung des Hinweises auf die Patenterteilung: **17.05.2006**
(21) Anmeldenummer: 02019596.2
(22) Anmeldetag: 03.09.2002
(51) Int. Cl.: C09J 133/02, C08F 20/06, C08F 220/18, C09J 7/02

(54) **Acrylathaftklebemassen mit enger Molekulargewichtsverteilung**
Acrylic pressure sensitive adhesives with narrow molecular weight distribution
Adhésif acrilique sensible à la presion et une distribution en poids moleculaire étroite

(30) Priorität: 05.10.2001 DE 10149083
(43) Veröffentlichungstag der Anmeldung: 09.04.2003
(73) Patentinhaber: tesa AG, 20253 Hamburg (DE)
(72) Erfinder: Husemann, Marc, Dr., 22605 Hamburg (DE); Zöllner, Stephan, Dr., 22043 Hamburg (DE)

(56) Entgegenhaltungen:
- EP-A- 0 578 498
- STEENBOCK M ET AL: "TRIAZOLINYL RADICALS - NEW ADDITIVES FOR CONTROLLED RADICAL POLYMERIZATION" MACROMOLECULAR CHEMISTRY AND PHYSICS, WILEY VCH, WEINHEIM, DE, Bd. 199, Nr. 5, 1. Mai 1998 (1998-05-01), Seiten 763-769, XP000774620 ISSN: 1022-1352
- DASGUPTA A ET AL: "TRIAZOLINYL-CONTROLLED RADICAL POLYMERIZATION AS INNOVATIVE ROUTE TO POLY(HYDROXYETHYL METHACRYLATE)" POLYMER BULLETIN, SPRINGER VERLAG. HEIDELBERG, DE, Bd. 46, Nr. 2/3, 1. April 2001 (2001-04-01), Seiten 131-138, XP001017503 ISSN: 0170-0839
- DATABASE WPI Section Ch, Week 200169 Derwent Publications Ltd., London, GB; Class A14, AN 2001-605602 XP002227329 & JP 2001 214142 A (NITTO DENKO CORP), 7. August 2001 (2001-08-07)

## Beschreibung

Die Erfindung betrifft ein Verfahren zur Herstellung von Acrylathaftklebemassen mit geringer Molekulargewichtsverteilung mittels radikalischer Polymerisation.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vernetzt. Die Härtung verläuft thermisch oder durch UV-Vernetzung oder durch ES-Härtung (ES: Elektronenstrahlung). Der beschriebene Prozeß ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Weiterhin ist es sehr schwierig, Haftklebebänder mit hohem Masseauftrag blasenfrei herzustellen.

Eine Verbesserung dieser Nachteile bedeutet der Heißschmelz-Prozeß (Hotmelt-Prozeß). Hier wird der Haftkleber in der Schmelze auf das Trägermaterial aufgetragen.

Mit dieser neuen Technik sind aber auch Einschränkungen verbunden. Vor der Beschichtung wird der Haftklebemasse das Lösemittel in einem Trocknungsextruder entzogen. Der Trocknungsprozeß ist mit einer relativ hohen Temperatur und Schereinwirkung verbunden, so daß besonders hochmolekulare Polyacrylathaftklebemassen stark geschädigt werden. Die Acrylathaftklebemasse vergelt oder der niedermolekulare Anteil wird durch Molekulargewichtsabbau stark angereichert wird. Beide Effekte sind unerwünscht, da sie für die Anwendung nachteilig sind. Die Klebemasse läßt sich entweder nicht mehr beschichten oder die klebtechnischen Eigenschaften der Haftklebemasse verändern sich, da z.B. bei Einwirken einer Scherkraft auf die Klebmasse die niedermolekularen Anteile als Gleitmittel wirken und so zu einem vorzeitigen Versagen der Klebemasse führen.

Eine Lösung zur Verminderung dieser Nachteile bieten Polyacrylatklebemassen mit mittlerem niedrigen Molekulargewicht und enger Molekulargewichtsverteilung. Hier wird der Anteil an niedermolekularen und hochmolekularen Molekülen in dem Polymer durch den Polymerisationsprozeß stark vermindert. Durch den Wegfall der hochmolekularen Anteile verringert sich die Fließviskosität, und die Masse zeigt eine geringere Tendenz zur Vergelung. Durch die Absenkung des niedermolekularen Anteils wird die Anzahl der Oligomere verringert, die die Scherfestigkeit der Haftklebemasse verringern.

Zur Herstellung von niedermolekularen Haftklebemassen sind verschiedene Polymerisationsmethoden geeignet. Stand der Technik ist der Einsatz von Reglern, wie z.B. von Alkoholen oder Thiolen (Makromoleküle, Hans-Georg Elias, 5. Auflage, 1990, Hüthig & Wepf Verlag Basel). Diese Regler reduzieren das Molekulargewicht, aber verbreitern die Molekulargewichtsverteilung.

Als eine weitere kontroiiierte Poiymerisationsmethode wird die Atom Transfer Radical Polymerization ATRP eingesetzt, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Cu-, Ag- oder Au-Komplexe [EP 0 824 111 A1; EP 0 826 698 A1; EP 0 824 110 A1; EP 0 841 346 A1; EP 0 850 957 A1] eingesetzt werden. Die unterschiedlichen Möglichkeiten der ATRP sind ferner in den US 5,945,491, US 5,854,364 und US 5,789,487 beschrieben. Generell werden Metallkatalysatoren eingesetzt, die als Nebenwirkung die Alterung der Haftklebemassen negativ beeinflussen (Vergelung, Umesterung). Zudem sind die meisten Metallkatalysatoren giftig, verfärben die Klebemasse und lassen sich nur durch aufwendige Fällungen aus dem Polymer entfernen. Eine weitere Variante ist der RAFT-Prozeß (Reversible Addition-Fragmentation Chain Transfer). Der Prozeß ist in den WO 98/01478 A1 und WO 99/31144 A1 ausführlich beschrieben, eignet sich jedoch in der dort dargestellten Art und Weise nicht zur Herstellung von Haftklebemassen, da die erzielten Umsätze sehr gering sind und das mittlere Molekulargewicht der hergestellten Polymere zu niedrig für Acrylathaftklebemassen ist. Die beschriebenen Polymere lassen sich somit nicht als Acrylathaftklebemassen einsetzen.

Verbesserung des Herstellungsprozesses durch die Einführung von Thioestern oder Trithiocarbonaten sind Gegenstand der Forschung. Dennoch weisen generell Thioester oder Trithiocarbonate enthaltende Acrylathaftklebemassen für viele Anwendungsbereiche Nachteile auf. Bei Vernetzung mit Elektronenstrahlen (erforderlich für Acrylathotmelts, aufgetragen mit hohem Masseauftrag) entstehen während der Bestrahlung Schwefelfragmente, die einen sehr unangenehmen Geruch verursachen. Dieser ist für Haftklebebänder unbedingt zu vermeiden.

In der US 4,581,429 wird ein kontrolliertes radikalisches Polymerisationsverfahren offenbart. Das Verfahren wendet als Initiator eine Verbindung der Formel R'R"N-O-X an, worin X eine freie radikalische Spezies darstellt, die ungesättigte Monomere polymerisieren kann. Die Reaktionen weisen aber im allgemeinen geringe Umsatzraten aus. Besonders problematisch ist die Polymerisation von Acrylaten, die nur zu sehr geringen Ausbeuten und Molekulargewichten abläuft.

In der WO 98/13392 A1 werden offenkettige Alkoxyamin-Verbindungen beschrieben, die ein symmetrisches Substitutionsmuster aufweisen. Die EP 735 052 A1 offenbart ein Verfahren zur Herstellung thermoplastischer Polymere mit engen Poiydispersitäten.

Die WO 96/24620 A1 beschreibt ein Polymerisationsverfahren, bei dem sehr spezielle Radikalverbindungen, wie z.B. Phosphor-enthaltende Nitroxide, beschrieben werden.

Die WO 98/30601 A1 offenbart spezielle Nitroxyle, die auf Imidazolidin basieren.

Die WO 98/4408 A1 offenbart spezielle Nitroxyle, die auf Morpholinen, Piperazinonen und Piperazindionen basieren.

Die DE 199 49 352 A1 offenbart heterocyclische Alkoxyamine als Regulatoren in kontrollierten radikalischen Polymerisationen.

Entsprechende Weiterentwicklungen der Alkoxyamine bzw. der korrespondierenden freien Nitroxide verbesserten die Effizienz zur Herstellung von Polyacrylaten. [Hawker, C.J. Vortrag, Hauptversammlung der American Chemical Society in San Francisco, Frühjahr 1997; Husemann, M., IUPAC World-Polymer Meeting 1998, Gold Coast, Australien, Vortrag über "Novel Approaches to Polymeric Brushes using 'Living' Free Radical Polymerizations" (Juli 1998)]

In den vorstehend erwähnten Patenten bzw. Vorträgen wurde versucht, die Steuerung von radikalischen Polymerisationsreaktionen zu verbessern. Dennoch besteht der Bedarf für ein Nitroxid-gesteuertes Polymerisationsverfahren, welches hoch reaktiv ist und mit dem sich hohe Umsätze bei gleichzeitig hohem Molekulargewicht und niedriger Polydispersität realisieren lassen.

Versuche zu derartigen Verfahren erfordern sehr inerten Bedingungen; weiterhin können nur aufgereinigte und destillierte Monomere eingesetzt werden. Dieses Verfahren ist derzeit nur schwer in einen industriellen und wirtschaftlichen Prozeß zu übertragen.

In der US 6,166,155 und in der WO 98/11143 werden dagegen Verfahren zur Polymerisation von Vinviverbindungen beschrieben, welches Polymere mit Polydispersitäten kleiner 2 liefern. Hier werden Elektronendoner-Verbindungen bzw. Triazoyl-Radikale als Kontrollreagenzien zur Polymerisation eingesetzt. Acrylathaftklebemassen werden dort nicht beschrieben. Zudem enthalten die dort beschriebenen Verbindungen z.T. Schwefel oder Selen, was wiederum bei der Elektronenbestrahlung zur Vernetzung dieser Acrylathaftklebemassen zur Fragmentierung führen würde. Weiterhin unterliegen Acrylathaftklebebänder sehr strengen Auflagen, so daß Selen-haltige Haftklebebänder per se auszuschließen sind.

Zudem sind Polydispersitäten von kleiner 2 für Acrylathaftklebemassen nur sehr schwer zu erreichen, da die Polymerisationen generell bis zu hohem Umsatz (>98%) geführt werden müssen. Um dies in einer relativ kurzen Zeit zu bewerkstelligen, müssen mehrere Initiatoren hinzugegeben werden, die die Reaktion beschleunigen und damit die Wirkung des Kontrollreagenzes verschlechtern. Ein Polydispersitätsbereich von 2 bis 3.5 wird daher als ideal angesehen.

Aufgabe der Erfindung ist es daher, ein Initiatorsystem für ein entsprechendes Polymerisationsverfahren zur Verfügung zu stellen und ein Polymerisationsverfahren anzubieten, welches die Nachteile des genannten Standes der Technik nicht oder nur in vermindertem Umfang aufweist.

Überraschenderweise wurde gefunden, das Triazolinyl-Verbindungen als Kontrollreagenzien des Typs (I) in Verbindung mit thermisch langsam zerfallenden Azo- oder Peroxoinitiatoren die Polymerisation zur Herstellung von Acrylathaftklebemassen sehr wirksam und schnell bei höheren Temperaturen erlauben.

Anspruch 1 betrifft demnach ein Verfahren zur Herstellung von Acrylathaftklebemassen mittels radikalischer Polymerisation einer Monomermischung zu einem Polyacrylat, wobei als Initiatorsystem zumindest eine Triazolinylverbindung der allgemeinen Formel 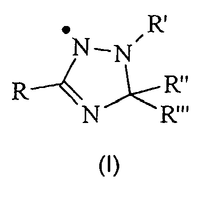 eingesetzt wird, wobei R, R^{I}, R^{II}, R^{III} unabhängig voneinander gewählt sind oder gleich sind
- verzweigte und unverzweigte C₁- bis C₁₈-Alkylreste; C₃- bis C₁₈-Alkenylreste; C₃- bis C₁₈-Alkinylreste;
- C₁- bis C₁₈-Alkxoyreste
- durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
- C₂-C₁₈-Hetero-Alkylreste mit mindestens einem O-Atom und/oder einer NR^{IV}-Gruppe in der Kohlenstoffkette, wobei R^{IV} ein beliebiger organischer Rest sein kann und insbesondere verzweigte und unverzweigte C₁- bis C₁₈-Alkylreste; C₃- bis C₁₈₋Alkenylreste; C₃- bis C₁₈-Alkinylreste ist,
- mit zumindest einer Estergruppe, Amingruppe, Carbonatgruppe, Cyanogruppe, Isocyanogruppe und/oder Epoxidgruppe und/oder mit Schwefel substituierte C₁-C₁₈₋Alkylreste, C₃-C₁₈-Alkenylreste, C₃-C₁₈-Alkinylreste;
- C₃-C₁₂-Cycloalkylreste
- C₆-C₁₀-Arylreste
- Wasserstoff
darstellen.

Kontrollreagenzien (Triazolinylverbindungen im Sinne des oben dargestellten Initiatorsystems) des Typs (I) bestehen in einer mehr bevorzugten Auslegung aus folgenden weiter eingeschränkten Verbindungen:
Halogene sind hierbei bevorzugt F, Cl, Br oder 1, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl-, Ethyl-, Propyl-, Isopropyl-, Butyl-, Isobutyl-, t-Butyl-, Pentyl-, 2-Pentyl-, Hexyl-, Heptyl-, Octyl-, 2-Ethylhexyl-, t-Octyl-, Nonyl-, Decyl-, Undecyl-, Tridecyl-, Tetradecyl-, Hexadecyl- und Octadecylreste.

Beispiele für Alkenylreste mit 3 bis 18 Kohlenstoffatomen sind Propenyl-, 2-Butenyl-, 3-Butenyl-, Isobutenyl-, n-2,4-Pentadienyl-, 3-Methyl-2-butenyl-, n-2-Octenyl-, n-2-Dodecenyl-, Isododecenyl- und Oleylreste.

Beispiele für Alkinylreste mit 3 bis 18 Kohlenstoffatomen sind Propinyl-, 2-Butinyl-, 3-Butinyl-, n-2-Octinyl- und n-2-Octadecinylreste.

Beispiele für Hydroxy-substituierte Alkylreste sind Hydroxypropyl-, Hydroxybutyl- oder Hydroxyhexylreste.

Beispiele für Halogen-substituierte Alkylreste sind Dichlorobutyl-, Monobromobutyl- oder Trichlorohexylreste.

Ein geeigneter C₂-C₁₈-Hetero-Alkylrest mit mindestens einem O-Atom in der Kohlenstoffkette ist beispielsweise -CH₂-CH₂-O-CH₂-CH₃.

Als C₃-C₁₂-Cycloalkylreste dienen beispielsweise Cyclopropyl-, Cyclopentyl-, Cyclohexyl- oder Trimethylcyclohexylreste
Als C₆-C₁₀-Arylreste dienen beispielsweise Phenyl-, Naphthyl-, Benzylreste, oder weitere substituierte Phenylreste, wie z.B. Ethylbenzol, Propylbenzol, p-tert.-Butylbenzyl etc., Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

In einer besonders vorteilhaften Vorgehensweise werden die Triazolinylverbindungen derart gewählt, daß R^{II} und R^{III} in Form einer Spiroverbindung miteinander verbunden sind.

Sehr bevorzugt werden Verbindungen (la) und (Ib) als Kontrollreagenzien eingesetzt.

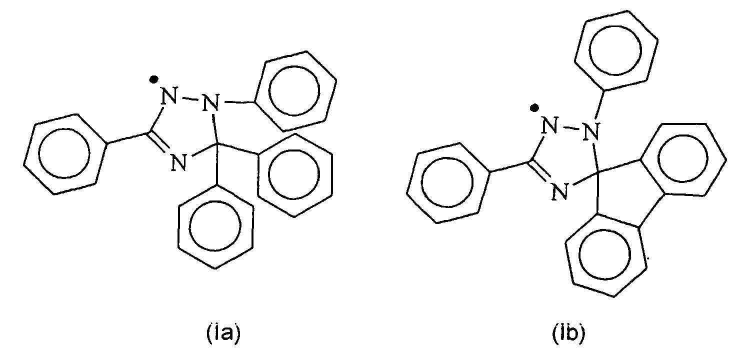

Das erfinderischen Verfahrens wird sehr bevorzugt derart durchgeführt, daß die Polyacrylate eine Molekulargewichtsverteilung P von 2 bis 3,5 aufweisen. Die Bestimmung der Polydispersität erfolgt über Größenausschlußchromatographie (Gelpermeationschromatographie, GPC).

Die Verbindungen des Initiatorsystems liegen vorzugsweise in einer Menge von 0.001 Mol-% bis 10 Mol-%, bevorzugt in einer Menge von 0.01 bis 1 Mol-%, bezogen auf die Monomermischung, vor.

In einer sehr vorteilhaften Weiterentwicklung des erfinderischen Verfahrens sind zusätzlich weitere radikalische Initiatoren zur Polymerisation enthalten, insbesondere thermisch zerfallende Initiatoren, besonders radikalbildende Azo- oder Peroxo-Initiatoren. Diese werden bevorzugt vor oder im Verlauf der Polymerisation zugesetzt, wobei die Zugabe der weiteren Initiatoren in mindestens zwei Verfahrensstufen erfolgt.
Prinzipiell eignen sich hierfür alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88^{™} der Fa. DuPont) verwendet.

Weiterhin können auch Radikalquellen verwendet werden, die erst unter Bestrahlung mit UV-Licht Radikale freisetzen.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden. Für den Einsatz von UV-Initiatoren wird mit UV-Licht der geeigneten Wellenlänge eingestrahlt. Diese Reaktion kann in einem Temperaturbereich von 0 °C bis 150 °C durchgeführt werden.

Nachdem der Polymerisationsschritt beendet ist, kann das Reaktionsgemisch auf eine Temperatur unterhalb 60 °C, vorzugsweise auf Raumtemperatur, abgekühlt werden.

Für das Verfahren zur Herstellung der Acrylathaftklebemasse wird bevorzugt eine Monomermischung eingesetzt, welche zumindest zu 70 Gew.-% aus ethylenisch ungesättigten Verbindungen, insbesondere aus (Meth-)Acrylsäure und/oder deren Derivaten, besteht. Diese wird unter Einsatz des beschriebenen Initiatorsystems kontrolliert radikalisch polymerisiert.

Bevorzugt wird als Monomergemisch ein solches bestehend aus zumindest 70 Gew.-% acrylischer Monomeren der allgemeinen Formel 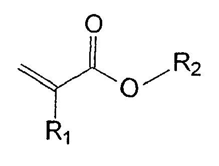 eingesetzt, wobei R₁ = H oder CH₃ und R₂ = H oder eine Alkylkette mit 1 - 20 C-Atomen ist.

In einer vorteilhaften Ausführungsform des erfinderischen Verfahrens werden als Monomere zusätzlich Vinylverbindungen mit einem Anteil bis zu 30 Gew.-% eingesetzt, insbesondere eine oder mehrere Vinylverbindungen gewählt aus der folgenden Gruppe:
Vinylester, Vinylhalogenide, Vinylidenhalogenide, Nitrile ethylenisch ungesättigter Kohlenwassserstoffe.
Als Beispiele für derartige Vinylverbindungen seien hier genannt Vinylacetat, N-Vinylformamid, Vinylpyridine, Acrylamide, Acrylsäure, Hydroxyethylacrylat, Hydroxyethylmethacrylat, Ethylvinylether, Vinylchlorid, Vinylidenchlorid, Acrylonitril, Maleinsäureanhydrid, Styrol, ohne sich durch diese Aufzählung unnötig beschränken zu wollen. Weiterhin können alle weiteren Vinylverbindungen, weiche unter die oben angeführte Gruppe fallen, eingesetzt werden, aber auch alle anderen Vinylverbindungen, die nicht in die oben genannten Verbindungsklassen fallen.

Zur Polymerisation werden die Monomere dermaßen gewählt, daß die resultierenden Polymere als industriell verwendbare Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb 25 °C.

Die Polymerisation kann in Gegenwart eines oder mehrerer organischer Lösungsmittel und/oder in Gegenwart von Wasser durchgeführt werden. In einer vorteilhaften Ausführungsform des Verfahrens liegen zusätzliche Colösungsmittel oder Tenside, wie Glycole oder Ammoniumsalze von Fettsäuren, vor.

Bevorzugte Verfahren verwenden möglichst wenig Lösungsmittel. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, butyl-, oder -hexylester), halogenierte Kohlenwasserstoffe (Chlorbenzol), Alkanole (Methanol, Ethanol, Ethylenglycol, Ethylenglycolmonomethylether) und Ether (Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

In einer weiteren Vorgehensweise kann die Polymerisation auch in Substanz durchgeführt werden. Hierbei muss die Reaktionsführung und der Reaktor dermaßen gestaltet sein, daß die während der Polymerisation entstehende Polymerisationswärme abgeführt werden kann und die Masse nicht vergelt. Weiterhin können zusätzlich Verbindungen hinzugesetzt werden, die die Vergelung der Haftklebemasse vermeiden.

Die hergestellten Polyacrylate weisen bevorzugt ein mittleres Molekulargewicht (Gewichtsmittel) M_{w} von 75.000 bis 700.000 g/mol, mehr bevorzugt zwischen 100.000 und 450.000 g/mol auf. Die Bestimmung des mittleren Molekulargewichtes M_{W} erfolgt über Größenausschlußchromatographie (Gelpermeationschromatographie, GPC) oder Matrixunterstützte Laser-Desorption/lonisations-Massenspektrometrie (MALDI-MS).

Die nach diesem Verfahren hergestellten Acrylathaftklebemassen besitzen, je nach Reaktionsführung, eine Polydispersität P = M_{w}/Mₙ von 2 bis 3.5.

Für die Verwendung der nach dem erfinderischen Verfahren hergestellten Polyacrylate als Haftklebemassen werden die Polyacrylate zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwicklung werden zu der Haftklebemasse ein oder mehrere Weichmacher, wie z.B. niedermolekulare Polyacrylate, Phthalate, Walöweichmacher oder Weichharze hinzudosiert.

Die Acrylathaftklebemassen können des weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.
Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Insbesondere für die Verwendung als Haftklebemasse ist es für das erfinderische Verfahren vorteilhaft, wenn das Polyacrylat bevorzugt aus der Schmelze auf einen Träger oder auf ein Trägermaterial als Schicht aufgebracht wird.

Hierfür werden die wie im vorhergehenden beschrieben hergestellten Polyacrylate vorteilhaft zu einer Polyacrylatmasse aufkonzentriert, deren Lösungsmittelgehalt ≤ 2 Gew.-% ist. Dieser Prozeß findet bevorzugt in einem Aufkonzentrationsextruder statt. Die Polyacrylatmasse wird dann in einer günstigen Variante des Verfahrens als Heißschmelzmasse in Form einer Schicht auf einen Träger oder auf ein Trägermaterial aufgetragen.

Weiterhin lassen sich die erfindungsgemäß hergestellte Polyacrylate mindestens 8 Stunden bei 140 °C im Hotmelt-Prozeß gelfrei verarbeiten. Gelfrei bedeutet, daß das Polymer kein Polymernetzwerk während der Aufkonzentration, im z.B. Aufkonzentrationsextruder, ausbildet und auch bis zur Förderung zur Beschichtungseinheit kein Gel bildet. Diese Eigenschaft ist für Acrylatschmelzhaftkleber essentiell, da vergelte Massen bei der Beschichtung aus der Düse oder durch die Walze ansonsten Gelstippen oder Schlieren zeigen würden. Diese sind im Sinne eines einheitlichen und auch verkäuflichen Produktes (Haftklebeband) zu vermeiden. Im Extremfall lassen sich derart vernetzte Polyacrylathaftklebemassen nicht mehr beschichten. Diese Qualitäts-Anforderung ist insbesonders für Polyacrylathaftklebemassen mit enger Molekulargewichtsverteilung schwer zu erreichen, da Polymerisationsregler chemische Verbindungen in die Polymerkette inkorporieren, die als Bruchstellen für thermische Zersetzung als auch Zersetzung unter Scherung dienen können.

Als Trägermaterialien für die Haftklebemasse, beispielsweise für Klebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vernetzern abgemischt. Die Vernetzung kann in günstiger Weise thermisch oder durch energiereiche Strahlung; im letzteren Fall insbesondere durch Elektronenstrahlung (ES) oder nach Zugabe geeigneter Photoinitiatoren durch ultraviolette Strahlung hervorgerufen werden.

Bevorzugte unter Strahlung vernetzende Substanzen gemäß dem erfinderischen Verfahren sind z.B. bi- oder multifunktionelle Acrylate oder bi- oder multifunktionelle Urethanacrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

Als Photoinitiatoren eignen sich bevorzugt Norrish-Typ I - und -Typ II -Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt.

Ein weiterer Vorteil des erfinderischen Verfahrens ist, daß die Vernetzung von den obenbeschriebenen Haftschmelzklebern ohne Fragmente verläuft, die zu einer Geruchsbelästigung führen können.

Im weiteren wird die Verwendung des nach dem erfinderischen Verfahren hergestellten Polyacrylates als Haftklebemasse beansprucht.

Insbesondere ist die Verwendung der wie beschrieben hergestellten Polyacrylathaftklebemasse für ein Klebeband von Vorteil, wobei die Polyacrylathaftklebemasse ein- oder beidseitig auf einem Träger aufgetragenen sein kann.

### Beispiele

### Testmethoden

Folgende Testmethoden wurden angewendet, um die klebtechnischen als auch generelle Eigenschaften der hergestellten Haftklebemassen zu evaluieren.

### 180° Klebkrafttest (Test A)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur durchgeführt.

### Scherfestigkeit (Test B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei Raumtemperatur wurde ein 1 kg-Gewicht an dem Klebeband befestigt. Die gemessenen Scherstandzeiten sind in Minuten angegeben und entsprechen dem Mittelwert aus drei Messungen.

### Gelpermeationschromatographie GPC (Test C)

Die Bestimmung des mittleren Molekulargewichtes M_{W} und der Polydisperistät PD erfolgte durch die Firma Polymer Standards Service in Mainz. Als Eluent wurde THF mit 0.1 Vol.-% Trifluoressigsäure eingesetzt. Die Messung erfolgte bei 25°C. Als Vorsäule wurde PSS-SDV, 5 µ, 10³ Å, ID 8.0 mm x 50 mm verwendet. Zur Auftrennung wurden die Säulen PSS-SDV, 5 µ, 10³ sowie 10⁵ und 10⁶ mit jeweils ID 8.0 mm x 300 mm eingesetzt. Die Probenkonzentration betrug 4 g/l, die Durchflußmenge 1.0 ml pro Minute. Es wurde gegen PMMA-Standards gemessen.

### Bestimmung des Gelanteils (Test D)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### Bestimmung des Umsatzes (Test E)

Die Bestimmung des Umsatzes erfolgte gravimetrisch und wird prozentual zu der Gewichtsmenge der eingesetzten Monomere angegeben. Zur Isolierung des Polymers wird in auf -78°C abgekühltem Methanol gefällt, abfiltriert und anschließend das Polymer im Vakuumschrank getrocknet. Das Gewicht des Polymers wird gewogen und geteilt durch die Einwaage der eingesetzten Monomere. Der berechnete Wert entspricht dem prozentualem Umsatz.

### Durchführungen

### Durchführung des Hotmeltprozeßes im Meßkneter:

Die Scherung und thermische Belastung der Acrylathotmelts wurde mit dem Meßkneter Rheomix 610p der Fa. Haake durchgeführt. Als Antriebseinheit stand das Gerät Rheocord RC 300p zur Verfügung. Gesteuert wurde das Gerät mit der Software PolyLab System. Der Kneter wurde jeweils mit 52 g reiner Acrylathaftklebemasse (~80 % Füllgrad) befüllt. Die Versuche wurden bei einer Knettemperatur von 140 °C, einer Umdrehungszahl von 60 U/min und einer Knetzeit von 8 Stunden durchgeführt. Anschließend wurden die Muster, wenn möglich, wieder aufgelöst und der Gelanteil nach Test D bestimmt.

### Herstellung der Triazolinyle 1a (1,3,5,5-Tetraphenyl-Δ³-1,2,4-triazolin-2yl) und 1b (1',3'-Diphenylspiro[9H-fluoren-9,5'-[Δ³-1,2,4-triazolin]-yl])

Die Darstellung der Substanzen ist in Macromolecules 1998, Vol. 31, No. 16, S. 5223-5228 bzw. in Angewandte Chemie, 1989, 101, S. 486-488 bzw. Tetrahedron 1995, 51,12883-12898. Es wurde analog den entsprechenden Versuchsvorschriften vorgegangen.

### Allgemeine Durchführung der Polymerisationen (Methode 1):

Eine Mischung aus dem Triazolinyl 1a oder 1b (0.15 Mol-% bezogen auf die Monomere), und 0.1 Mol-% Vazo 67^{™} (bezogen auf die Monomere) werden mit den Monomeren (85 %ige Lösung in Ethylacetat) gemischt, mehrmals entgast und anschließend unter Argonatmosphäre auf 80°C erhitzt. Nach 6 h werden wiederum und 0.1 Mol-% Vazo 67^{™} (bezogen auf die Monomere) hinzugegeben. Nach 24 h wird die Polymerisation abgebrochen und auf Raumtemperatur abgekühlt. Die Molekulargewichtsbestimmung und die Polydispersität erfolgte via GPC (Test C), die Bestimmung des Umsatzes nach Test E.

### Herstellung der Referenzmuster

### Beispiel 1

Ein für radikalische Polymerisationen konventioneller 2 L-Glasreaktor wurde mit 28 g Acrylsäure, 292 g 2-Ethylhexylacrylat, 40 g Methylacrylat und 300 g Aceton/lsopropanol (93:7) befüllt. Nach 45 Minuten Durchleiten von Stickstoffgas unter Rühren wurde der Reaktor auf 58 °C hochgeheizt und 0,2 g Azoisobutyronitril (AIBN, Vazo 64^{™}, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 3 und 6 h wurde mit jeweils 150 g Aceton/lsopropanol (93:7) Gemisch verdünnt. Zur Reduktion der Restinitiatoren wurden nach 8 und nach 10 h jeweils 0,4 g Bis-(4-tert.-Butylcyclohexanyl)-Peroxy-dicarbonat (Perkadox 16^{™}, Fa Akzo Nobel) hinzugegeben. Die Reaktion wurde nach 22 h Reaktionszeit abgebrochen und auf Raumtemperatur abgekühlt.

Das mittlere Molekulargewicht und die Polydispersität wurden mittels Test C bestimmt.

Zur Untersuchung der thermischen Alterung wurde die Klebmasse in einem Vakuum-Trockenschrank vom Lösemittel befreit und anschließend nach oben beschriebener Methode im Meßkneter geschert und thermisch belastet.

Zur Überprüfung der klebtechnischen Eigenschaften wurde das getrocknete Polyacrylat über einen Walzen-Laborcoater mit 50 g/m² auf einen mit einem Saran-Primer versehenden 23 µm dicken PET-Träger beschichtet und dann mit 40 kGy bei einer Beschleunigungsspannung von 230KV durch eine ES-Anlage der Fa. Crosslinking bestrahlt und gehärtet. Zur klebtechnischen Beurteilung wurden die Testmethoden A und B durchgeführt.

### Beispiel 2

Es wurde analog Beispiel 1 vorgegangen. Zur Polymerisation wurden 28 g Acrylsäure, 20 g Methylacrylat, 20 g Styrol und 332 g 2-Ethylhexylacrylat eingesetzt. Die Startmonomerkonzentration wurde auf 80 % heraufgesetzt.

### Triazolinyl-gesteuerte Polymerisationen

### Beispiel 3

Es wurden 28 g Acrylsäure, 292 g 2-Ethylhexylacrylat, 40 g Methylacrylat eingesetzt. Es wurde analog Methode 1 vorgegangen, wobei als Regler 1,3,5,5-Tetraphenyl-Δ³-1,2,4-triazolin-2yl eingesetzt wurde. Zur Aufarbeitung und Weiterverarbeitung wurde analog Beispiel 1 vorgegangen.

### Beispiel 3'

Es wurden 28 g Acrylsäure, 292 g 2-Ethylhexylacrylat, 40 g Methylacrylat eingesetzt. Es wurde analog Methode 1 vorgegangen, wobei als Regler 1',3'-Diphenylspiro[9H-fluoren-9,5'-[Δ³-1,2,4-triazolin]-2-yl] eingesetzt wurde. Zur Aufarbeitung und Weiterverarbeitung wurde analog Beispiel 1 vorgegangen.

### Beispiel 4

Es wurden 28 g Acrylsäure, 20 g Methylacrylat, 20 g Styrol und 332 g 2-Ethylhexylacrylat eingesetzt. Es wurde analog Methode 1 vorgegangen, wobei als Regler 1,3,5,5-Tetraphenyl-Δ³-1,2,4-triazolin-2yl eingesetzt wurde. Zur Aufarbeitung und Weiterverarbeitung wurde analog Beispiel 1 vorgegangen.

### Beispiel 4'

Es wurden 28 g Acrylsäure, 20 g Methylacrylat, 20 g Styrol und 332 g 2-Ethylhexylacrylat eingesetzt. Es wurde analog Methode 1 vorgegangen, wobei als Regler 1',3'-Diphenylspiro[9H-fluoren-9,5'-[Δ³-1,2,4-triazolin]-2-yl] eingesetzt wurde. Zur Aufarbeitung und Weiterverarbeitung wurde analog Beispiel 1 vorgegangen.

### Beispiel 5

Es wurden wurden 40 g Acrylsäure und 360 g 2-Ethylhexylacrylat eingesetzt. Es wurde analog Methode 1 vorgegangen, wobei als Regler 1',3'-Diphenylspiro[9H-fluoren-9,5'-[Δ³⁻1,2,4-triazolin]-2-yl] eingesetzt wurde. Zur Aufarbeitung und Weiterverarbeitung wurde analog Beispiel 1 vorgegangen.

### Beispiel 6

Es wurden 12 g Acrylsäure, 194 g 2-Ethylhexylacrylat und 194 g n-Butylacrylat eingesetzt. Es wurde analog Methode 1 vorgegangen, wobei als Regler 1',3'-Diphenylspiro[9H-fluoren-9,5'-[Δ³-1,2,4-triazolin]-2-yl]...eingesetzt wurde. Zur Aufarbeitung und Weiterverarbeitung wurde analog Beispiel 1 vorgegangen.

### Resultate

Der Vergleich der Beispiele 1 und 2 mit 3 und 4 belegt die Vorteile der durch Triazolinyl gesteuerter Polymerisation hergestellten Polyacrylathaftklebemassen. Die Referenzmuster (Beispiele 1 und 2) wurden konventionell in einer freien radikalischen Polymerisation hergestellt. Zum Vergleich wurden mit der identischen Comonomerzusammensetzung die Polyacrylate in Beispiel 3 und 4 mit der Triazolinyl-gesteuerten Polymerisation hergestellt. Die Ergebnisse der Polymerisationen sind in Tabelle 1 dargestellt:

| | | |
|---|---|---|
| Tabelle 1 | | |

| Beispiel | M_{W} [g/mol] | Polydispersität PD |
|---|---|---|
| 1 | 489500 | 5.9 |
| 2 | 532000 | 6.3 |
| 3 | 355000 | 3.0 |
| 4 | 378000 | 2.8 |

Die Beispiele 1 und 2 weisen durch die freie radikalische Polymerisation und der mehrfachen Initiierung mit den thermisch zerfallenden Initiatoren eine hohe Polydispersität auf. Isopropanol als Regler reduziert das mittlere Molekulargewicht, verbreitert aber in der Regel die Molekulargewichtsverteilung. Durch die Triazolinyi-gesteuerte Polymerisation werden bedeutend niedrigere Polydispersitäten erzielt. Zudem wird die Verarbeitbarkeit im Hotmelt-Prozess deutlich verbessert. Hierfür wurden die Beispiele 1 bis 4 in einem Hotmeltkneter mehrere Stunden bei 140 °C thermisch belastet und geschert. Anschließend wurde der Gelwert gemessen, um den Einfluß der Schädigung auf das Polymer zu untersuchen. Die Ergebnisse sind in Tabelle 2 dargestellt:

| | |
|---|---|
| Tabelle 2 | |

| Beispiel | Gelwert [%] |
|---|---|
| 1 | 11 |
| 2 | 8 |
| 3 | 0 |
| 4 | 0 |

Beispiele 1 und 2 zeigen nach der Scherbelastung eine deutliche Alterung. Die Masse besitzt einen Gelwert von 8 % (Beispiel 2) bzw. 11 % (Beispiel1). Zum Teil vergelte Polyacrylate lassen sich nicht als Haftklebemassen im Hotmelt-Verfahren noch aus Lösung beschichten. Daher sind solche gealterten Haftklebemassen vollkommen ungeeignet für die praktische Anwendung. Hingegen zeigen die Beispiele 3 und 4 keine Alterungsphänomene, wie z.B. eine Vergelung. Durch die Triazolinyl-gesteuerte Polymerisation enthalten die Polymere als Endgruppe diese Verbindungen, die bei hohen Temperaturen wieder in stabile Radikale zerfallen und somit als Radikalfänger in situ wirken können. Durch das Polymerisationsverfahren wird somit direkt ein Alterungsschutzmittel in die Haftklebemasse eingebaut. Die auf diesem Weg hergestellten Polyacrylate lassen sich problemlos im Hotmelt-Verfahren verarbeiten und sind dementsprechend bevorzugt als Haftklebemassen einzusetzen.

Zur Beurteilung der klebtechnischen Eigenschaften werden die Haftklebemassen auf dem Trägermaterial vernetzt. Während der ES-Vernetzung traten keine geruchsintensiven Substanzen auf, die auf eine Zersetzung des polymerisationskontrollierenden Reagenzes im Polymer hindeuten würden. In Tabelle 3 werden die klebtechnischen Daten miteinander verglichen:

| | | |
|---|---|---|
| Tabelle 3 | | |

| Beispiel | SSZ (RT, 10 N) | KK-Stahl [N/cm] |
|---|---|---|
| 1 | 2475 | 3.8 |
| 2 | 3490 | 3.7 |
| 3 | +10000 | 3.6 |
| 4 | +10000 | 3.4 |

| | | |
|---|---|---|
| SSZ: Scherstandzeiten | | |
| RT: Raumtemperatur | | |
| KK: Klebkraft | | |

Die engere Verteilung der Molekulargewichte bewirkt bei der ES-Vernetzung ein effizienteres Netzwerk. Die Scherfestigkeit der Haftklebemassen wird erhöht. Die Beispiele 3 und 4 zeigen bei identischer Comonomerzusammensetzung gegenüber den Beispielen 1 und 2 eine deutlich höhere Scherfestigkeit. Die Beispiele 1 und 2 lassen sich durch das höhere Molekulargewicht leichter ES vernetzen, so dass die Scherfestigkeit durch eine Übervernetzung bereits abnimmt. Die enger-verteilen Beispiele 3 und 4 benötigen durch das niedrigere mittlere Molekulargewicht und der engeren Molekulargewichtsverteilung eine höhere Strahlendosis, so dass diese Muster optimal vernetzt sind. Die Einfluss im Bereich der Klebkräfte ist vernachlässigbar.

Zur Überprüfung der Effizienz des erfindungsgemäßen Herstellungsverfahrens wurde der Umsatz der Beispiele 3, 3', 4 und 4' bestimmt. Die Umsätze lagen in allen Fällen (s. Tabelle 4 bei 95 % und größer.

| | |
|---|---|
| Tabelle 4 | |

| Beispiel | Umsatz [%] |
|---|---|
| 3 | 95 |
| 3' | 95 |
| 4 | 95 |
| 4' | 96 |

Die Umsatzbestimmungen belegen, daß für eine kontrollierte radikalische Polymerisation durch die mehrfache Vazo 67^{™} -Zugabe hohe Umsätze sich realisieren lassen, die Acrylathaftschmelzklebern genügen.

Zur Überprüfung des erfindungsgemäßen Verfahrens zur Herstellung von Acrylathaftklebebändern wurden weitere Acrylathaftklebemassen mit unterschiedlicher Comonomerzusammensetzung mittels Triazolinyl-gesteuerter Polymerisation hergestellt. Die Ergebnisse der aus der Schmelze beschichteten Polyacrylate sind in Tabelle 5 dargestellt.

| | | |
|---|---|---|
| Tabelle 5 | | |

| Beispiel | SSZ (RT, 10 N) | KK-Stahl [N/cm] |
|---|---|---|
| 5 | +10000 | 4,1 |
| 6 | 5420 | 4,9 |

| | | |
|---|---|---|
| SSZ: Scherstandzeiten | | |
| RT: Raumtemperatur | | |
| KK: Klebkraft | | |

Die Beispiele 5 und 6 belegen, daß auch noch weitere Comonomere verwendet werden können. So lassen sich auch weichere Acrylathaftklebemassen herstellen, die eine höhere Klebkraft z.B. auf Stahl besitzen. Auch die Scherfestigkeit der beschriebenen Acrylatschmelzhaftkleber ist sehr hoch.

Das erfinderische Verfahren erlaubt es, Haftklebebänder zur Verfügung zu stellen, die wenig geruchsintensiv sind und somit die Qualitätsanforderungen für den Einsatz für Haftklebebänder erfüllen. Schwefelverbindungen, welche als Additive bei Verfahren nach dem Stand der Technik oftmals zugesetzt sind, um die gewünschten Eigenschaften der Haftklebemasse zu erzielen, ließen sich durch das erfinderische Verfahren überraschend durch weniger oder gar nicht riechende Substanzen ersetzen, ohne eine Einbuße in den geforderten Eigenschaften hinnehmen zu müssen.

Zudem ließ0en sich durch das erfinderische Verfahren Haftklebemassen herstellen, welche sich durch thermische Einwirkung auflösen oder zersetzen lassen (pyrolisierbare und/oder verdampfbare Systeme). Dies macht die erfindungsgemäß hergestellten Haftklebemassen besonders geeignet für Anwendungen, weiche Haftklebemasssen erfordern, die zu gegebener Zeit wieder entfernt werden sollen.

## Patentansprüche

1. Verfahren zur Herstellung von Acrylathaftklebemassen mittels radikalischer Polymerisation einer Monomermischung zu einem Polyacrylat, **dadurch gekennzeichnet, daß**
als Initiatorsystem zumindest eine Triazolinylverbindung der allgemeinen Formel 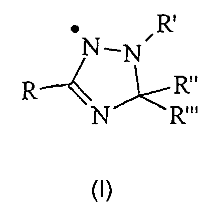 eingesetzt wird, wobei R, R^{I}, R^{II}, R^{III} unabhängig voneinander gewählt werden aus der folgenden Gruppe:
- verzweigte und unverzweigte C₁- bis C₁₈-Alkylreste; C₃- bis C₁₈-Alkenylreste; C₃ bis C₁₈-Alkinylreste;
- C₁- bis C₁₈ Alkxoyreste
- durch zumindest eine OH-Gruppe oder ein Halogenatom oder einen Silylether substituierte C₁- bis C₁₈-Alkylreste; C₃- bis C₁₈-Alkenylreste; C₃- bis C₁₈₋Alkinylreste;
- C₂-C₁₈-Hetero-Alkylreste mit mindestens einem O-Atom und/oder einer NR^{IV-}Gruppe in der Kohlenstoffkette und R^{IV} ein beliebiger organischer Rest ist,
- mit zumindest einer Estergruppe, Amingruppe, Carbonatgruppe, Cyanonogruppe, Isocyanogruppe und/oder Epoxidgruppe und/oder mit Schwefel substituierte C₁-C₁₈-Alkylreste, C₃-C₁₈-Alkenylreste, C₃-C₁₈-Alkinylreste;
- C₃-C₁₂-Cycloalkylreste
- C₆-C₁₀-Arylreste
- Wasserstoff
darstellen.

2. Verfahren nach Anspruch 1, **dadurch gekennzeichnet, daß**
R^{II} und R^{III} in Form einer Spiroverbindung miteinander verbunden sind.

3. Verfahren nach zumindest einem der vorangehenden Ansprüche, **dadurch gekennzeichnet, daß**
als Triazolinylverbindung eine Verbindung der folgenden Formel eingesetzt wird:

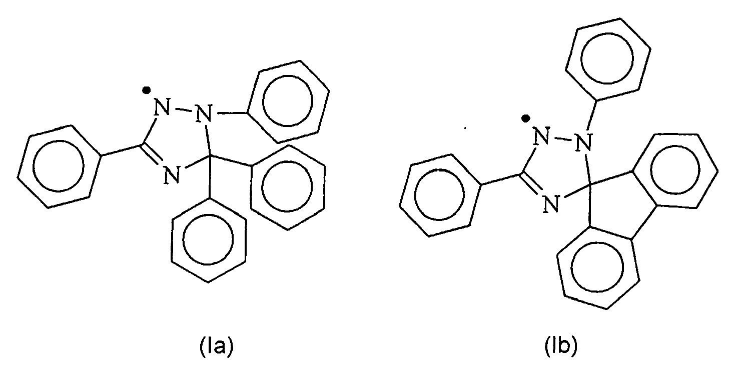

4. Verfahren nach zumindest einem der vorangehenden Ansprüche, **dadurch gekennzeichnet, daß**
das Polyacrylat eine Molekulargewichtsverteilung P von 2 bis 3,5 aufweist.

5. Verfahren nach Anspruch 4, **dadurch gekennzeichnet, daß**
die Verbindungen des Initiatorsystems zu 0,001 Mol-% bis 10 Mol-%, bevorzugt zu 0,01 bis 1 Mol-%, bezogen auf die Monomermischung, vorliegt.

6. Verfahren nach zumindest einem der vorangehenden Ansprüche, **dadurch gekennzeichnet, daß**
vor oder im Verlauf der Polymerisation weitere, thermisch zerfallende radikalbildende Initiatoren zugesetzt werden, bevorzugt Azo- und/oder Peroxo-Initiatoren, wobei die Zugabe der weiteren Initiatoren in mindestens zwei Verfahrensstufen erfolgt.

7. Verfahren nach zumindest einem der vorangehenden Ansprüche, **dadurch gekennzeichnet, daß**
im Verlauf oder nach der Polymerisation Harze oder andere Additive, wie Alterungsschutzmittel, Lichtschutzmittel, Ozonschutzmittel, Fettsäuren, Weichmacher, Keinbildner, Blähmittel, Beschleuniger, Füllmittel oder dergleichen zugesetzt werden.

8. Verfahren nach zumindest einem der vorangehenden Ansprüche, **dadurch gekennzeichnet, daß**
das Polyacrylat aus der Schmelze heraus gelfrei weiterverarbeitet wird, insbesondere auf einen Träger aufgetragen wird.

9. Verfahren nach zumindest einem der vorangehenden Ansprüche, **dadurch gekennzeichnet, daß**
das Polyacrylat durch Bestrahlung mit energiereicher Strahlung vernetzt wird.

10. Verwendung einer nach zumindest einem der vorangehenden Ansprüche hergestellten Haftklebemasse für ein ein- oder doppelseitiges Haftklebeband.

## Claims

1. Process for preparing acrylic pressure sensitive adhesives by means of radical polymerization of a monomer mixture to give a polyacrylate, **characterized in that** as initiator system at least one triazolinyl compound of the general formula 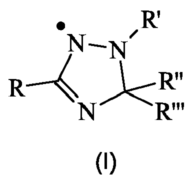 is used, where R, R^{I}, R^{II}, R^{III} are chosen independently of one another from the following group:
- branched and unbranched C₁ to C₁₈ alkyl radicals; C₃ to C₁₈ alkenyl radicals; C₃ to C₁₈ alkynyl radicals
- C₁ to C₁₈ alkoxy radicals
- C₁ to C₁₈ alkyl radicals substituted by at least one OH group or a halogen atom or a silyl ether; C₃ to C₁₈ alkenyl radicals; C₃ to C₁₈ alkynyl radicals
- C₂-C₁₈ heteroalkyl radicals having at least one oxygen atom and/or an NR^{IV} group in the carbon chain, it being possible for R^{IV} to be any organic radical
- C₃-C₁₈ alkenyl radicals, C₃-C₁₈ alkynyl radicals, C₁-C₁₈ alkyl radicals substituted by at least one ester group, amine group, carbonate group, cyano group, isocyano group and/or epoxide group and/or by sulphur
- C₃-C₁₂ cycloalkyl radicals
- C₆-C₁₀ aryl radicals
- hydrogen.

2. Process according to Claim 1, **characterized in that** R^{II} and R^{III} are joined together with one another in the form of a spiro compound.

3. Process according to at least one of the preceding claims, **characterized in that** a triazolinyl compound of the following formula is used:

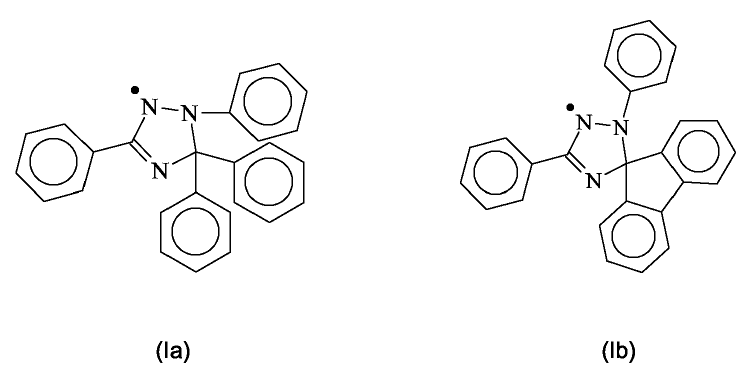

4. Process according to at least one of the preceding claims, **characterized in that** the polyacrylate has a molecular weight distribution P of from 2 to 3.5.

5. Process according to Claim 4, **characterized in that** the compounds of the initiator system are present at from 0.001 mol% to 10 mol%, preferably from 0.01 to 1 mol%, based on the monomer mixture.

6. Process according to at least one of the preceding claims, **characterized in that** prior to or in the course of the polymerization further, radical-forming, thermal-decomposition initiators are added, preferably azo and/or peroxo initiators, the addition of the further initiators taking place in at least two process stages.

7. Process according to at least one of the preceding claims, **characterized in that** in the course or following the polymerization resins or other additives, such as ageing inhibitors, light stabilizers, ozone protectants, fatty acids, plasticizers, nucleators, blowing agents, accelerators, fillers or the like, are added.

8. Process according to at least one of the preceding claims, **characterized in that** the polyacrylate is processed further in gel-free form from the melt, and in particular is applied to a backing.

9. Process according to at least one of the preceding claims, **characterized in that** the polyacrylate is crosslinked by exposure to high-energy radiation.

10. Use of a pressure sensitive adhesive prepared in accordance with at least one of the preceding claims for a single- or double-sided pressure sensitive adhesive tape.

## Revendications

1. Procédé de préparation de masses autoadhésives acryliques par polymérisation radicalaire d'un mélange de monomères pour former un polyacrylate, **caractérisé en ce que** l'on met en oeuvre en tant que système initiateur au moins un composé de triazolinyle de la formule générale 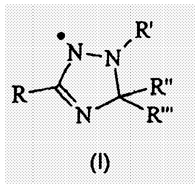 dans laquelle R, R^{I}, R^{II}, R^{III} sont choisis indépendamment les uns des autres ou dans le groupe suivant :
- des radicaux alkyle en C₁ à C₁₈, des radicaux alcényle en C₃ à C₁₈, des radicaux alkynyle en C₃ à C₁₈, ramifiés ou non ramifiés,
- des radicaux alcoxy en C₁ à C₁₈,
- des radicaux alkyle en C₁ à C₁₈, des radicaux alcényle en C₃ à C₁₈, des radicaux alkynyle en C₃ à C₁₈ substitués par au moins un groupe OH ou un atome d'halogène ou un éther silylique,
- des radicaux hétéroalkyle en C₂ à C₁₈ avec au moins un atome O et/ou un groupe NR^{IV} dans la chaîne carbonée, où R^{IV} peut être un radical organique quelconque,
- des radicaux alkyle en C₁ à C₁₈, des radicaux alcényle en C₃ à C₁₈, des radicaux alkynyle en C₃ à C₁₈ substitués par au moins un groupe ester, un groupe amine, un groupe carbonate, un groupe cyano, un groupe isocyano et/ou un groupe époxyde et/ou du soufre,
- des radicaux cycloalkyle en C₃ à C₁₂,
- des radicaux aryle en C₆ à C₁₀,
- de l'hydrogène.

2. Procédé selon la revendication 1, **caractérisé en ce que** R^{II} et R^{III} sont liés entre eux sous la forme d'un composé spiro.

3. Procédé selon au moins l'une quelconque des revendications qui précèdent, **caractérisé en ce que** l'on met en oeuvre en tant que composé de triazolinyle un composé des formules suivantes :

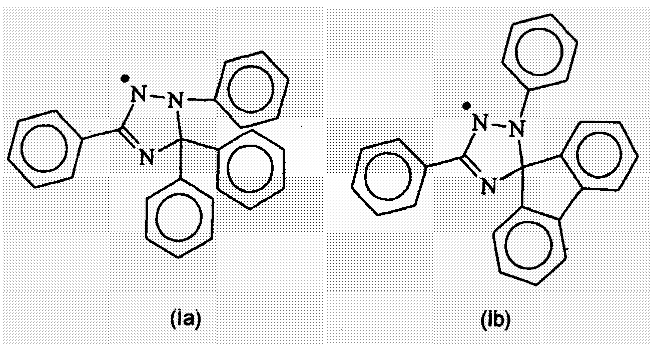

4. Procédé selon au moins l'une quelconque des revendications qui précèdent, **caractérisé en ce que** le polyacrylate présente une distribution de poids moléculaire P de 2 à 3,5.

5. Procédé selon la revendication 4, **caractérisé en ce que** les composés du système initiateur sont présents à raison de 0,001% en moles à 10% en moles, de préférence de 0,01 à 1% en moles, par rapport au mélange de monomères.

6. Procédé selon au moins l'une quelconque des revendications qui précèdent, **caractérisé en ce que**, avant ou au cours de la polymérisation, on ajoute des initiateurs supplémentaires qui se décomposent à la chaleur et forment des radicaux, de préférence des composés azoïques et/ou peroxo, l'addition des initiateurs supplémentaires se faisant en au moins deux étapes du procédé.

7. Procédé selon au moins l'une quelconque des revendications qui précèdent, **caractérisé en ce que**, au cours de la polymérisation ou après, on ajoute des résines ou d'autres additifs, comme des agents de protection contre le vieillissement, des photoprotecteurs, des agents de protection contre l'ozone, des acides gras, des plastifiants, des formateurs de germes, des agents blanchissants, des accélérateurs, des charges ou similaires.

8. Procédé selon au moins l'une quelconque des revendications qui précèdent, **caractérisé en ce que** le polyacrylate est retravaillé sans formation de gel à partir de la masse fondue, en particulier appliqué sur un support.

9. Procédé selon au moins l'une quelconque des revendications qui précèdent, **caractérisé en ce que** le polyacrylate est réticulé par irradiation au moyen d'un rayonnement à haute énergie.

10. Utilisation d'une masse autoadhésive préparée selon au moins l'une quelconque des revendications qui précèdent pour un ruban autoadhésif simple face ou double face.
